# EUROPÄISCHE PATENTANMELDUNG

(11) **EP 0 953 525 A2**
(43) Veröffentlichungstag der Anmeldung: **03.11.1999**
(21) Anmeldenummer: 99108255.3
(22) Anmeldetag: 27.04.1999
(51) Int. Cl.: B65G 53/48

(54) **Verfahren und Vorrichtung zum Einbringen von festen schüttgutartigen bis flüssig-teigigen Stoffen in Prozessabläufe, vor allem Fördersysteme mit höherem Druckniveau**

(30) Priorität: 28.04.1998 DE 19818935
(71) Anmelder: Spies, Klaus, Prof. Dr.-Ing.Dr. hc., D-52076 Aachen-Schmithof (DE)
(72) Erfinder: Spies, Klaus, Prof. Dr.-Ing.Dr. hc., D-52076 Aachen-Schmithof (DE)
(74) Vertreter: Ksoll, Peter, Dr.-Ing.

(57) **Zusammenfassung**

Die Vorrichtung besteht aus einer Einbringeinrichtung, der über eine trichterförmige Befülleinrichtung (1) ein Schüttgut (2) zugeführt wird. Eine von einem Motor (4) angetriebenen Förderschnecke (3) transportiert das Schüttgut (2) durch ein Förderrohr (5) zu einer Sperrstrecke (6). In der Sperrstrecke (6) wird eine Abdichtung gegenüber dem in der Förderleitung (7) herrschenden Systemdruck durch eine von außen auf den Volumenstrom gerichtete Druckkraft bewirkt. Die Sperrstrecke (6) ist von einem Hüllschlauch (8) umgeben, der von einem in einem Druckraum (9) durch Einleitung eines gasförmigen oder flüssigen Mediums herrschenden Druck beaufschlagt wird. Das Fördergut (10) wird in der Sperrstrecke (6) derart zusammengedrückt, dass das Porenvolumen zwischen den Körnern reduziert wird und eine Abdichtung erfolgt.

## Beschreibung

In vielen Bereichen der Industrie, vor allem in der chemischen und physikalischen Verfahrenstechnik sowie in der Bauindustrie, besteht die Notwendigkeit, Stoffe in Prozessabläufe - vor allem Fördersysteme - mit höherem Druckniveau einzubringen bzw. einzuschleusen. Bei flüssigen bis zähflüssigen Stoffen ist dies in einfacher Form durch Pumpen möglich. Selbst wenn sich feste Bestandteile in den Flüssigkeiten befinden, gibt es Sonderbauarten von Pumpen, die diese Aufgabe bewältigen. Schwieriger wird der Einbring- bzw. Einschleusvorgang dann, wenn es sich um feste schüttgutartige bis flüssig-teigige Stoffe handelt. Hier sind Maschinen und Geräte in Nutzung, die nach unterschiedlichen Prinzipien arbeiten. Es gibt Schleusen mit stationären und bewegten Kammern, solche, bei denen nach dem Druckaufbau Selbstentleerung durch Schwerkraft erfolgt, oder andere, bei denen die Entleerung aktiv durch Ausschubeinrichtungen oder durch den Förderstrom vorgenommen wird. Sehr häufig sind - insbesondere in der Bauindustrie - Zellenradschleusen mit rotatorischen Trommeln anzutreffen, bei denen die Transportluft durch die Zellen strömt und dadurch den Entleerungsvorgang herbeiführt.

Alle diese Maschinen und Geräte haben vielfältige technische und wirtschaftliche Nachteile. Schleusen mit stationären Kammern sind relativ groß und müssen paarweise angeordnet werden, wenn ein kontinuierlicher Förderstrom erreicht werden soll. Während die eine unter Druck stehende Kammer entleert wird, muss die andere neu befüllt werden, so dass der Einschleusvorgang im Grunde nur quasikontinuierlich erfolgt. Bei Zellenradschleusen müssen die bewegten Teile gegenüber dem Gehäuse abgedichtet werden, was insbesondere bei abrasivem Fördergut, wie beispielsweise Baustoff, zu geringen Standzeiten, hohem Verschleiß, erheblichen Ausfallzeiten und großen Kosten führt. Weiterhin haben Zellenradschleusen den verfahrenstechnisch sehr erheblichen Nachteil, dass sich bei feuchtem, zum Anbacken neigendem oder klebrigem Fördergut bei der Befüllung sogenannte "Brücken" in den Zellen bzw. Kammern bilden, die zu einer unvollkommenen Füllung der Zellen bzw. Kammern führen. Da die "Brückenbildung" nicht gleichmäßig, sondern unregelmäßig erfolgt, ist mit derartigen Maschinen kein kontinuierlicher, genau dosierter Förderstrom möglich. Insbesondere in der chemischen Industrie und in der Bauindustrie ist dies jedoch eine Anforderung, die für viele Prozesse mit hoher Qualität unabdingbare Voraussetzung ist. Daher werden in der Bauindustrie, wo in vielen Einsatzfällen, vor allem im Tunnelbau, Spritzbeton hoher Qualität benötigt wird, die Zellenradschleusen als unbefriedigend angesehen.

Die vorliegende Erfindung hat es sich nun zur Aufgabe gestellt, die vorbeschriebenen Nachteile der in Nutzung befindlichen Maschinen und Geräte zu beseitigen und einen gleichmäßigen Förderstrom zu erreichen, der - wenn die Prozessabläufe dies erforderlich machen sollten - zielgerichtet und nach vorgegebenen Parametern geändert oder geregelt werden kann. Dadurch wird insbesondere in der Bauindustrie die bisher nicht gelöste Aufgabenstellung, Zement und Zuschlagstoff in genau vorgegebenen Mischungsverhältnissen in einen Druckluftstrom einschleusen zu können, einer zufriedenstellenden Lösung zugeführt.

Erfindungsgemäß wird die Aufgabe dadurch gelöst, dass die festen schüttgutartigen bis flüssig-teigigen Stoffe durch eine Sperrstrecke in die Prozessabläufe bzw. Fördersysteme gedrückt werden, wobei die Sperrstrecke die Abdichtung des Systemdrucks übernimmt und eine oder mehrere angetriebene mechanische Einrichtungen den Druck und die Fördergutbewegung in Richtung auf die Sperrstrecke erzeugen. Das besondere Kennzeichen der Erfindung besteht darin, dass in der Sperrstrecke zusätzlich zu dem axialen auch ein von den Wandungen der Sperrstrecke nach innen gerichteter Druck auf den Volumenstrom ausgeübt wird.

In weiterer Ausgestaltung des Erfindungsgedankens wird die Sperrstrecke innerhalb eines umhüllenden Schlauchs angeordnet, auf den von außen durch ein gasförmiges oder flüssiges Medium Druck ausgeübt wird. Dabei ist es verfahrenstechnisch in vielen Fällen vorteilhaft, wenn der auf den umhüllenden Schlauch wirkende Druck dem Systemdruck entspricht, der in dem Prozessablauf oder Fördersystem herrscht, in welchen das Fördergut eingebracht bzw. eingeschleust werden soll.

Die grundsätzliche Zielsetzung der Erfindung kann auch dadurch erreicht werden, dass der umhüllende Schlauch von einer Wendel umgeben ist, deren Durchmesser durch Torsion in vorgegebenem Maße verkleinert werden kann, um den nach innen gerichteten Druck auf den Volumenstrom zu erzeugen oder zu unterstützen.

Eine weitere Alternative des grundsätzlichen Erfindungsgedankens besteht darin, dass zumindest ein Teil der Sperrstrecke konisch ausgebildet ist und hierdurch der zur Abdichtung des Systemdrucks notwendige Druck von den Wandungen auf den Volumenstrom erzeugt wird.

Bei entsprechender Kornverteilung im Fördergut wird durch die Erfindung erreicht, dass das Fördergut infolge des Wandungsdrucks in der Sperrstrecke in einem solchen Maße verdichtet wird, dass durch Schließung der Hohlräume zwischen den einzelnen Partikeln der Systemdruck, gegen den die Einbring- bzw. Einschleusbewegung erfolgen muss, durch das Fördergut selbst abgedichtet wird.

Ist die Kornverteilung des Förderguts ungünstiger, so kann der Erfindungsgedanke dadurch realisiert werden, dass dem Fördergut ein Hilfsstoff zum Schließen der Hohlräume zwischen den einzelnen Partikeln beigegeben wird. Dieser die Dichtwirkung in der Sperrstrecke verbessernde Hilfsstoff ist in besonderer Ausgestaltung des Erfindungsgedankens inert gegenüber dem Fördergut und wird nach der Einbringung in den Prozessablauf bzw. in den Förderstrom durch geeignete Maßnahmen bzw. Vorrichtungen wieder entfernt.

Dabei besteht eine besonders vorteilhafte Lösungsalternative darin, dass der Hilfsstoff nach dem Einbringvorgang in den gasförmigen oder flüssigen Aggregatzustand übergeht. In einer alternativen Ausgestaltung des Erfindungsgedankens werden Hilfsstoff und Fördergut in einem Zyklon voneinander getrennt. Besonders vorteilhaft ist es dabei, wenn der ausgeschiedene Hilfsstoff dem Fördergut vor der Sperrstrecke wieder zugeleitet wird.

Der Hilfsstoff kann aus elastischem, plastischem oder aus fasrigem Material bestehen. Eine besonders vorteilhafte Alternative besteht darin, wenn der Hilfsstoff aus einer gefrorenen Flüssigkeit oder einem gefrorenem Gas besteht. Das ist beispielsweise bei Schnee, gehacktem Eis oder Kohlensäureschnee der Fall.

Erfindungsgemäß kann durch Anpassung der Geschwindigkeit des Volumenstroms des Förderguts an besondere Vorgaben eine genaue Dosierung oder durch Änderung der Geschwindigkeit des Volumenstroms eine Regelung der zeitlichen Einbringmenge erreicht werden.

Bei einer besonders vorteilhaften Ausbildung der Erfindung ist hinter der Einbringeinrichtung ein Zerkleinerungsgerät vorgesehen, das den in der Sperrstrecke komprimierten bzw. zusammengebackenen Stoff wieder in den Zustand vor dem Einbringen versetzt.

Die Abförderung des in das Druckluft-Fördersystem eingeschleusten Materials, vorzugsweise Baustoff ,zum Verwendungsort kann im Dünnstromverfahren oder im Dichtstromverfahren erfolgen. Bei der Dichtstromförderung wird der Fördervorgang dadurch bewirkt, dass die Förderleitung (Rohr- oder Schlauchleitung) abwechselnd mit Pfropfen aus dem zu fördernden Material und Druckluftblasen beschickt bzw. befüllt wird. Der Energieinhalt der Druckluftblasen überwindet die Reibungswiderstände, so dass der Baustoff durch die Druckluftblasen vorwärts geschoben wird.

Eine Weiterbildung des grundsätzlichen Erfindungsgedankens sieht demgemäß vor, dass bei Dichtstromförderung am Austrag der Einbringeinrichtung ein mit vorzugsweise radial angeordneten Druckluftdüsen bestückter Düsenring vorgesehen ist.

Zweckmäßigerweise werden die Düsen in vorbestimmbaren Zeitintervallen mit Druckluft beaufschlagt. So können bedarfs- und maschinengerechte fördergutfreie Druckluftpolster in der Förderleitung gebildet werden. Hierbei werden über ein Ventil die Zeiten für die Druckluftzuführung in Abhängigkeit vom Einbringvorgang des Förderguts, beispielsweise von der Drehzahl einer für die Fördergutbewegung benutzten Förderschnecke, dem Volumenstrom des Förderguts sowie der Länge und dem Förderwiderstand der Förderleitung gesteuert.

Aufbau und Arbeitsweise des Verfahrens und der Vorrichtung zum Einbringen von festen schüttgutartigen bis flüssig-teigigen Stoffen in Prozessabläufe, vor allem Fördersysteme mit höherem Druckniveau, sind in 6 Abbildungen dargestellt und erläutert. Im einzelnen zeigen:
- Figur 1: die schematische Darstellung eines Längsschnitts durch die Einbringeinrichtung in der Ausführungsvariante mit druckbeaufschlagtem Hüllschlauch um den Volumenstrom;
- Figur 2: einen Längsschnitt durch die Sperrstrecke mit Hüllschlauch unter Verwendung eines Hilfsstoffs zur Erzeugung der Dichtwirkung;
- Figur 3: die schematische Darstellung eines Längsschnitts durch die Sperrstrecke in der Ausführungsvariante mit Hüllschlauch und außen herumgelegter Wendel;
- Figur 4: die schematische Darstellung eines Längsschnitts durch die Einbringeinrichtung in der Ausführungsvariante mit konisch geformter Sperrstrecke;
- Figur 5: die schematische Darstellung eines Längsschnitts durch die Einbringeinrichtung in der Ausführungsform mit Zyklon zum Entfernen des Hilfsstoffs;
- Figur 6: die schematische Darstellung eines Längsschnitts durch die Einbringeinrichtung mit nachgeschalteten Zerkleinerungseinrichtungen;
- Figur 7: die schematische Darstellung eines Längsschnitts durch eine weitere Ausführungsform einer Einbringeinrichtung für die Dichtstromförderung und
- Figur 8: technisch vereinfacht einen Schnitt durch die Darstellung der Figur 7 entlang der Linie VIII-VIII.

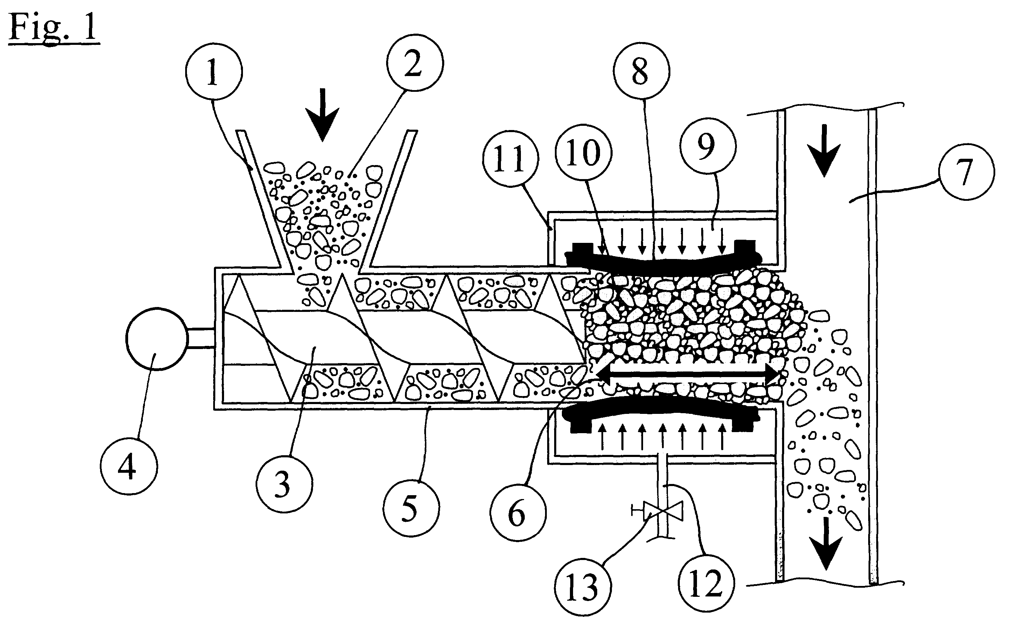

Figur 1 zeigt die schematische Darstellung eines Längsschnitts durch die Einbringeinrichtung in der Ausführungsvariante mit druckbeaufschlagtem Hüllschlauch. Über die vorzugsweise trichterförmige Befülleinrichtung 1 wird das Schüttgut 2 zugeführt, das in diesem Ausführungsbeispiel eine Kornverteilung hat, die bei Verdichtung zum Schließen des Porenvolumens zwischen den einzelnen Körnern führt. Mittels einer Förderschnecke 3, die von einem Motor 4 angetrieben wird und die in einem Förderrohr 5 läuft, wird das Fördergut 2 in die Sperrstrecke 6 bewegt und zusätzlich ein axialer Druck erzeugt. Dieser ist jedoch nicht hinreichend, um das Fördergut 2 in einer solchen Weise zusammenzupressen, dass der in der Förderleitung 7 herrschende Systemdruck in der Sperrstrecke 6 abgedichtet werden kann. Im Ausführungsbeispiel gemäß Figur 1 wird die Abdichtung gegen den Systemdruck dadurch erreicht, dass die Sperrstrecke 6 von einem Hüllschlauch 8 umgeben ist, der von außen in einem Druckraum 9 mit Druck durch gasförmiges oder flüssiges Medium beaufschlagt wird. Hierdurch ergibt sich eine zusätzliche, von außen auf den Volumenstrom wirkende nach innen gerichtete Druckkraft, die das Fördergut 10 in der Sperrstrecke 6 derart zusammendrückt, dass sich bei der in diesem Ausführungsbeispiel günstigen Kornverteilung das Porenvolumen zwischen den Körnern schließt und eine Abdichtung gegen den Druck in der Förderleitung 7 erfolgt.

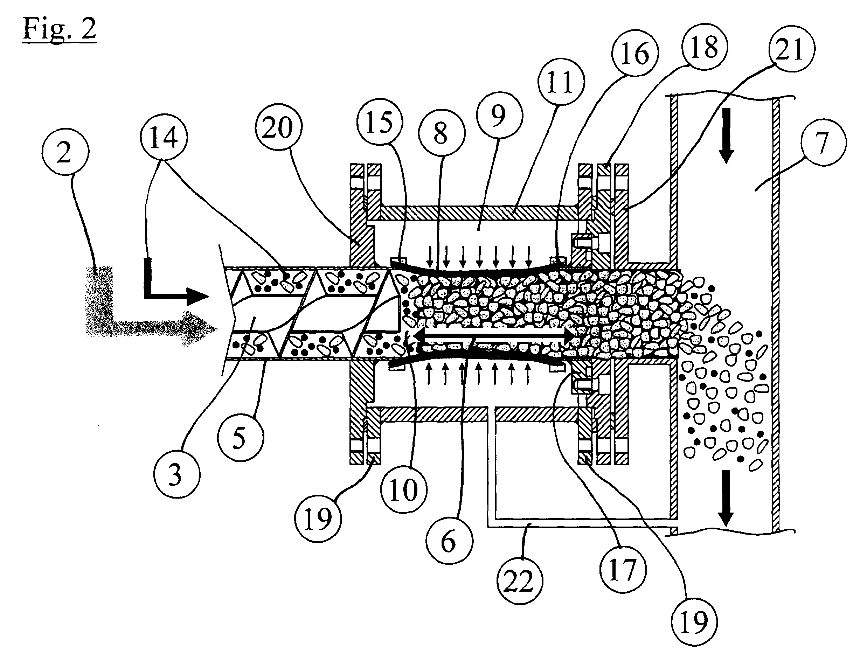

Der den Außendruck erzeugende Druckraum 9 wird durch das Gehäuse 11 umschlossen. Über die Zuführleitung 12 und Absperr- bzw. Regelorgane 13 wird das den Druck im Druckraum 9 erzeugende gasförmige oder flüssige Medium zugeführt bzw. in der Druckhöhe geregelt. Eine besonders vorteilhafte Ausführungsvariante hinsichtlich der Regelung des Druckmediums im Druckraum 9 ist in Figur 2 dargestellt. Sie besteht darin, dass der Druckraum 9 mit der Förderleitung 7 verbunden ist, so dass Druckschwankungen in der Förderleitung 7 entsprechende Änderungen des Drucks im Druckraum 9 zur Folge haben und damit eine Harmonisierung des Außendrucks auf den Hüllschlauch 8 erfolgt.

Nach Durchlaufen der Sperrstrecke 6 gelangt das Fördergut 10 in die Förderleitung 7, in der gasförmiges bzw. flüssiges Medium, vorzugsweise Druckluft, den Transport zum nicht dargestellten Bestimmungsort übernimmt.

Insbesondere in der Bauindustrie, wo der zugeführte Baustoff, Beton, Zuschlagstoff oder nur Zement möglicherweise auch Lehm eine derartige Kornverteilung besitzt, dass in der Sperrstrecke 6 eine vollkommene Abdichtung durch das Fördergut 10 erfolgen kann, findet die in Figur 1 dargestellte Ausführungsvariante der Erfindung eine vorteilhafte Anwendung. Baustoff besitzt nämlich wegen seiner späteren Verwendung als tragendes Element in Bauwerken, wo das Porenvolumen zur Erzeugung hoher Festigkeiten im abgebundenen Zustand nahezu Null sein muss, diese ideale Kornverteilung.

Auf Figur 2 ist eine mögliche konstruktive Ausgestaltung der Sperrstrecke 6 mit Hüllschlauch 8 dargestellt, wobei der Körnungsaufbau des Förderguts 2 ungünstig ist und ein Hilfsstoff 14, der plastische oder elastische Eigenschaften besitzt, beigemengt werden muss. Hilfsstoffe 14 zur Verbesserung der Dichtwirkung des Förderguts 10 in der Sperrstrecke 6 sind nur dann erforderlich, wenn die Kornverteilung ungünstig ist und trotz des Zusammenwirkens von axialem Druck und nach innen gerichtetem Druck aus der Wandung im Bereich der Sperrstrecke 6 kein Schließen des Porenvolumens zwischen den einzelnen Partikeln erreicht werden kann. Die Hilfsstoffe 14 nehmen diese Aufgabe wahr.

Die im Förderrohr 5 angeordnete Schnecke 3 ist nur teilweise dargestellt, da die Einlaufseite Figur 1 entspricht. Der Hüllschlauch 8 ist auf der einen Seite durch eine Schlauchschelle 15 auf dem Förderrohr 5 befestigt, auf der anderen Seite mit einer ebensolchen Schlauchschelle 16 an einem Flansch 17, der seinerseits wieder am tragenden Hauptflansch 18 angeschraubt ist. Das äußere Gehäuse 11 für den Druckraum 9 besitzt an beiden Seiten Flansche 19, die auf der einen Seite am Hauptflansch 18, auf der anderen Seite am Flansch 20 angeschraubt sind, der fest mit dem Förderrohr 5 verbunden ist. Hierdurch entsteht um die Sperrstrecke 6 herum eine stabile Konstruktion, an der die Förderleitung 7 über den Flansch 21 angeschraubt ist. Durch die Anordnung der Sperrstrecke 6 mit dem Hüllschlauch 8 in einem Gehäuse 11, das Flansche 19 an den Enden besitzt, und durch die im übrigen flanschartige Bauweise ist es möglich, den Hüllschlauch 8, der in größeren Zeitabständen ausgetauscht werden muss, einfach und mit geringem Arbeitsaufwand auszuwechseln.

Bei dieser Ausführungsvariante sind der Druckraum 9 und die Förderleitung 7 über die Verbindungsleitung 22 unmittelbar miteinander verbunden, so dass sich im Druckraum 9 der gleiche Druck einstellt wie in der Förderleitung 7. Hierdurch wird im Bereich der Sperrstrecke 6 eine auf den Druck in der Förderleitung 7 abgestimmte Kompression des Förderguts 2 und des Hilfsstoffs 14 erreicht. Zu hohe Verdichtungen würden die Reibung im Bereich der Sperrstrecke 6 unnötig vergrößern. Die Dichtwirkung wird durch den Druckausgleich über die Verbindungsleitung 22 stets auf dem optimalen Wert gehalten, um den Druck in der Förderleitung 7 abzudichten.

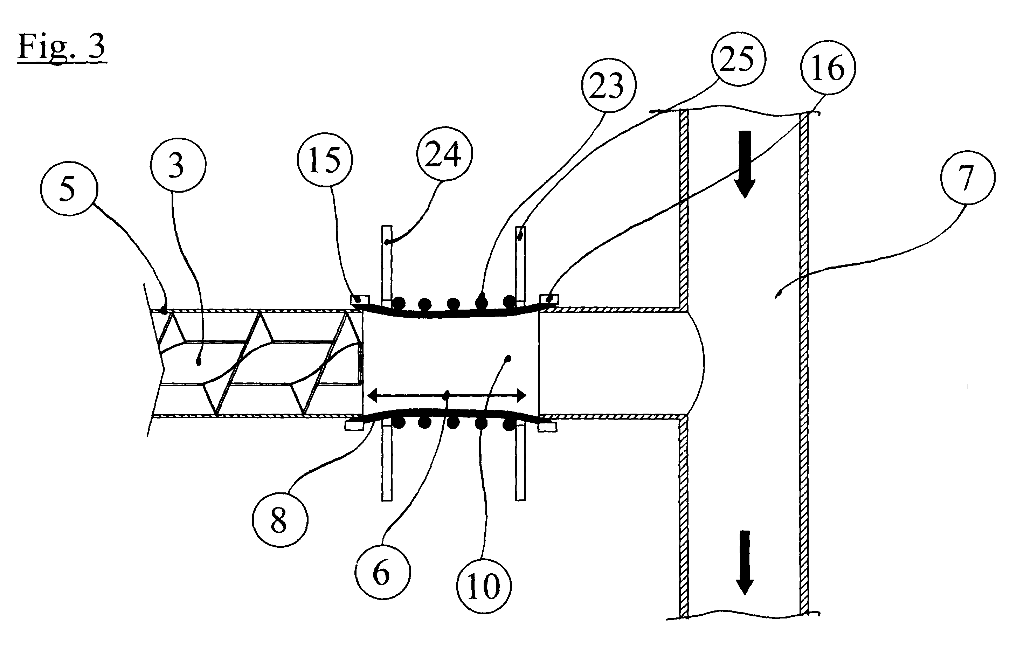

Figur 3 zeigt eine schematische Darstellung eines Längsschnitts durch die Sperrstrecke 6 in der Ausführungsvariante mit Hüllschlauch 8, bei welcher der von außen auf den Hüllschlauch 8 wirkende Druck durch eine Wendel 23, vorzugsweise eine aus Draht bestehende Schraubenfeder, erzeugt wird. Der Hüllschlauch 8 ist mittels der Schlauchschellen 15 und 16 auf dem Förderrohr 5 und dem Stutzen der Förderleitung 7 befestigt. Die um den Förderschlauch 8 eng herumgelegte Wendel 23 kann durch die beiden Stelleinrichtungen 24 und 25 in Torsionsspannung versetzt werden, indem diese beiden Stelleinrichtungen 24, 25 gegeneinander verdreht und durch nicht dargestellte Arretierungseinrichtungen festgelegt werden. Durch den Verdrehwinkel der beiden Stelleinrichtungen 24 und 25 kann die Verschlankung der Wendel 23 genau eingestellt und damit die Verdichtung des Förderguts 10 in der Sperrstrecke 6 exakt dimensioniert werden. Alle übrigen Bauteile entsprechen sinngemäß den Ausführungsvarianten von Figur 1 und Figur 2.

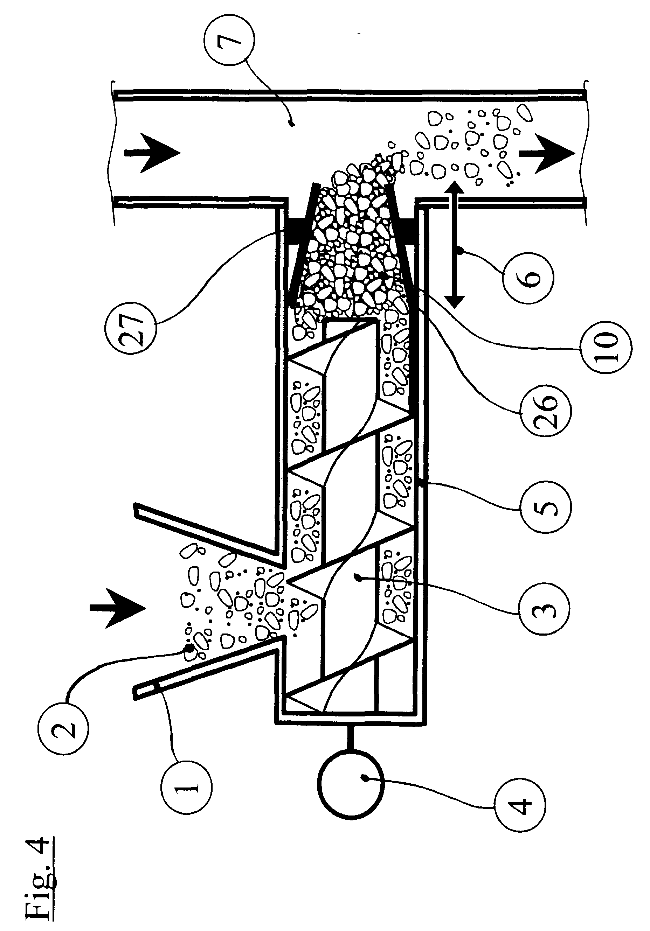

Figur 4 ist die schematische Darstellung eines Längsschnitts durch die Einbringeinrichtung in der Ausführungsvariante mit konisch ausgebildeter Sperrstrecke 6. Die Befülleinrichtung 1, die Zufuhr des Förderguts 2, die vom Motor 4 angetriebene Förderschnecke 3 und das Förderrohr 5 entsprechen Figur 1. Die Sperrstrecke 6 wird durch ein teilweise konisches Rohr 26 gebildet, das entweder an der Förderschnecke 3 oder am Förderrohr 5 befestigt sein kann. Im ersteren Fall dreht sich das Rohr 26 mit der Förderschnecke 5, im zweiten Fall bewegt es sich nicht. Im Ausführungsbeispiel wird das Fördergut 10, das eine günstige Kornverteilung mit hinreichendem Feinkornanteil besitzt, im Bereich der Sperrstrecke 6 durch die konische Ausbildung des Rohrs 26 porendicht zusammengedrückt, so dass der Druck in der Förderleitung 7 nicht durch das Fördergut 10 hindurch entweichen kann. In jedem Fall ist jedoch eine zusätzliche Abdichtung 27 erforderlich, damit das Druckmedium in der Förderleitung 7 nicht zwischen dem konischen Rohr 26 und dem Förderrohr 5 entweichen kann. Das Hindurchschieben des Förderguts 10 durch den konischen Teil des Rohrs 26 bewirkt den die Abdichtung gegen den Druck in der Förderleitung 7 erzeugenden Kompressionsvorgang, wobei das Porenvolumen des Förderguts 10 entweder - wie in diesem Ausführungsbeispiel - durch den Feinkornanteil oder bei ungünstiger Kornverteilung durch hinzugegebenen Hilfsstoff 14 geschlossen wird.

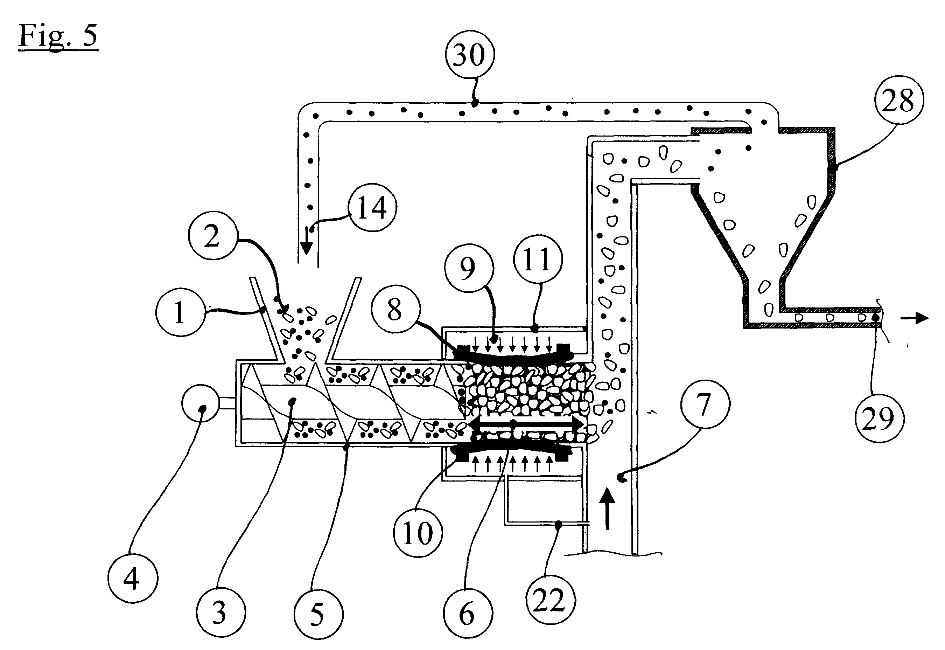

Figur 5 zeigt die schematische Darstellung eines Längsschnitts durch die Einbringeinrichtung in der Ausführungsvariante mit Zyklon zum Entfernen des Hilfsstoffs. Der Aufbau der Einbringeinrichtung entspricht weitgehend der Ausführungsvariante gemäß Figur 1. Der Motor 4 treibt die Förderschnecke 3 an, welche im Förderrohr 5 läuft. Der Hüllschlauch 8 wird durch das im Druckraum 9 befindliche gasförmige oder flüssige Medium mit Druck beaufschlagt. Der Druckraum 9 wird vom Gehäuse 11 umschlossen. Der Druckraum 9 steht über die Verbindungsleitung 22 direkt in Verbindung mit der Förderleitung 7, so dass in beiden der gleiche Druck herrscht. Dieser Druck wird im Bereich der Sperrstrecke 6 über den Hüllschlauch 8 auf das Fördergut 10 weitergegeben, das in diesem Fall eine ungünstige Kornverteilung hat, so dass Hilfsstoff 14 zum Schließen des Porenvolumens zwischen den einzelnen Körnern beigegeben werden muss. Fördergut 2 und Hilfsstoff 14 werden durch die Förderleitung 7 mit hoher Geschwindigkeit in den Zyklon 28 geführt, in dem eine Trennung erfolgt. Das Fördergut 2 wird mit dem weitaus überwiegenden Teil des strömenden Mediums durch die Leitung 29 zum Bestimmungsort geführt. Der Hilfsstoff 14 wird mit dem geringeren Teil des strömenden Mediums über die Leitung 30 zur Befülleinrichtung 1 zurückgeleitet, wobei im einzelnen nicht dargestellte Mischeinrichtungen dafür sorgen, dass Fördergut 2 und Hilfsstoff 14 vor der Einbringeinrichtung gut miteinander vermischt werden.

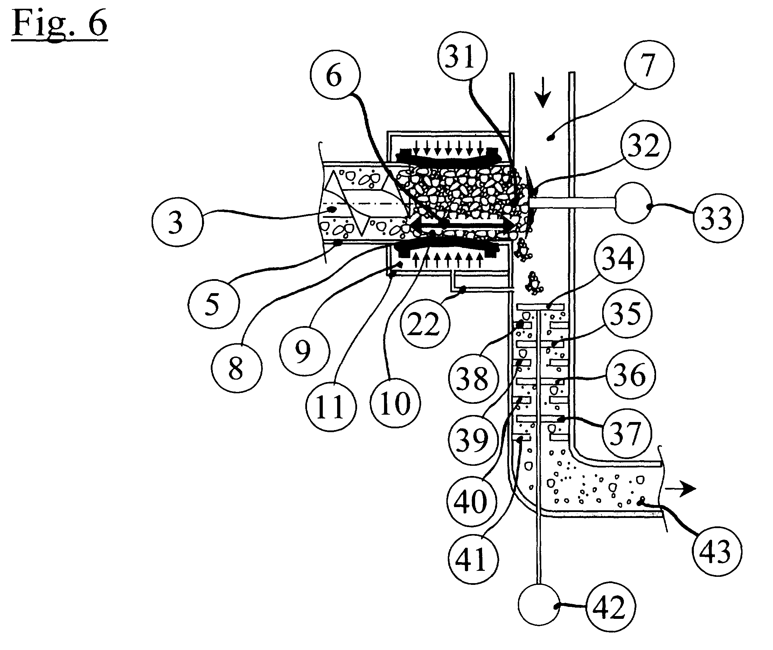

Figur 6 ist die schematische Darstellung eines Längsschnitts durch Teile der Einbringeinrichtung mit nachgeschalteten Zerkleinerungseinrichtungen. Insbesondere, wenn das Fördergut eine günstige Kornverteilung besitzt, so dass sich innerhalb der Sperrstrecke 6 durch den Druck im Druckraum 9 eine hohe Verdichtung ergibt, welche das Porenvolumen schließt, oder wenn zum überwiegenden Teil oder ausschließlich sehr feinkörniges Material befördert wird, kann im Bereich der Sperrstrecke 6 ein Zusammenbacken stattfinden. Daher sind hinter der Einbringeinrichtung Zerkleinerungsvorrichtungen vorgesehen, um das Fördergut unmittelbar hinter der Einbringeinrichtung wieder in den ursprünglichen Zustand zu versetzen. An der Stelle 31, wo das zusammengebackene Fördergut 10 in die Förderleitung 7 eintritt, befindet sich ein schnell rotierender Messersatz 32, der von einem Motor 33 angetrieben wird. Häufig ist diese Zerkleinerung jedoch nicht hinreichend, um das Fördergut 10 wieder in den Ursprungszustand zu versetzen. Daher ist dem Messersatz 32 ein ebenfalls schnell rotierender Satz von Schlagplatten 34, 35, 36 und 37 nachgeschaltet, die zwischen feststehenden Platten 38, 39, 40 und 41 angeordnet sind. Durch die schnell rotierenden, vom Motor 42 angetriebenen Schlagplatten 34 bis 37 wird das Fördergut 10 zusätzlich zur Axialbewegung jeweils in eine rotatorische Bewegung versetzt und durch die am Gehäuse befestigten Platten 38 bis 41 wieder abgebremst. Dieser mehrfache Wechsel von beschleunigendem Schlag in rotatorischer Richtung und abgebremstem Aufprall führt letztendlich dazu, dass das durch den Messersatz 32 bereits vorzerkleinerte Fördergut 10 an der Stelle 43 wieder in den Ursprungszustand versetzt worden ist.

Die Abförderung des in das Druckluft-Fördersystem eingeschleusten Materials, vorzugsweise Baustoff, zum Verwendungsort kann im Dünnstromverfahren (Ausführungsbeispiele gemäß Figur 1 bis Figur 6) oder im Dichtstromverfahren erfolgen. Das Dichtstromverfahren ist vorbekannt und betriebsbewährt, beispielsweise in der Bauindustrie bei der Estrichförderung. Der Fördervorgang wird beim vorerwähnten Dichtstromverfahren dadurch bewirkt, dass die Förderleitung (Rohr oder Schlauchleitung) abwechselnd mit "Pfropfen" des zu fördernden Materials und den ganzen Förderquerschnitt ausfüllenden Blasen aus Druckluft beschickt bzw. befüllt wird. Die in den Druckluftblasen steckende Energie schiebt die "Pfropfen" aus Baustoff in Förderrichtung vorwärts und überwindet die Reibungswiderstände.

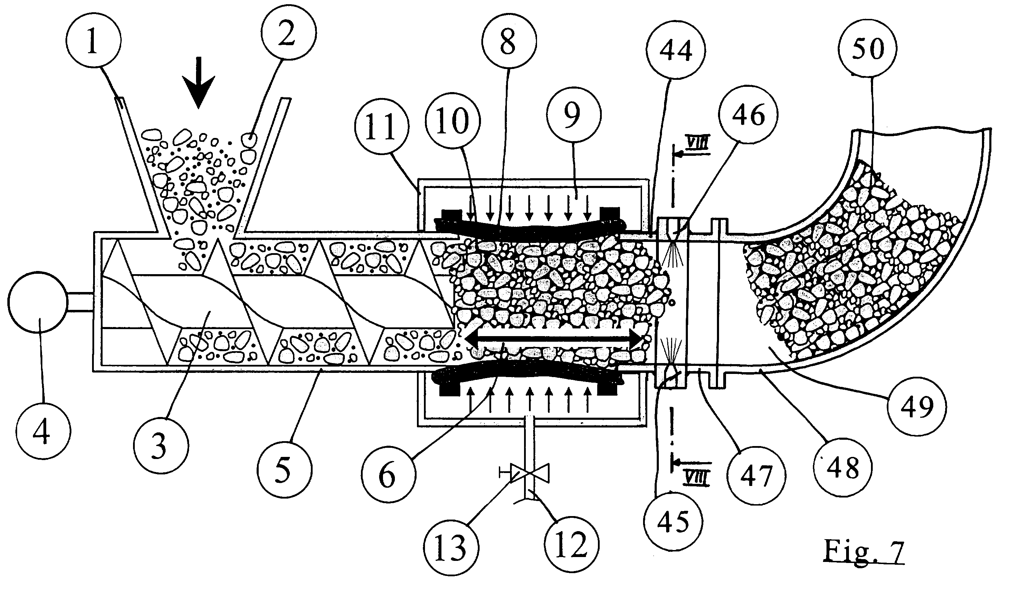

Um dieses Förderprinzip mit der Einschleustechnologie zu verbinden, bedarf es besonderer technischer Einrichtungen, deren grundsätzlicher Aufbau in Figur 7 an einem entsprechenden Ausführungsbeispiel dargestellt ist. Im Anschluss an die Sperrstrecke 6 wird der Volumenstrom 10 des einzuschleusenden Materials durch ein vorzugsweise kurzes Verbindungsrohr 44 bis zu einem mit Druckluftdüsen bestückten Düsenring 45 geleitet. Die in diesem Düsenring 45 vorzugsweise radial angeordneten Druckluftdüsen 46 werden in gewissen Zeitabständen mit Druckluft beaufschlagt. Das schnelle Einströmen der Druckluft in die Förderleitung führt dazu, dass sich in dem Förderrohr 47 und dem daran anschließenden Förderschlauch 48 ein mit Druckluft ausgefülltes fördergutfreies Druckluftkissen 49 ausbildet, das den in Förderrichtung vorauflaufenden Pfropfen 50 fortbewegt. Nach dem Abschalten der Druckluftdüsen 46 werden das Verbindungsrohr 44, der Düsenring 45 und das Förderrohr 47 wieder mit Material befüllt.

Das Einströmen der Druckluft aus den Druckluftdüsen 46 erfolgt außerordentlich schnell, so dass sich ein entsprechendes Druckluftkissen 49 auch dann ausbildet, wenn der Einschleusvorgang und das Durchströmen der Sperrstrecke 6 kontinuierlich erfolgen.

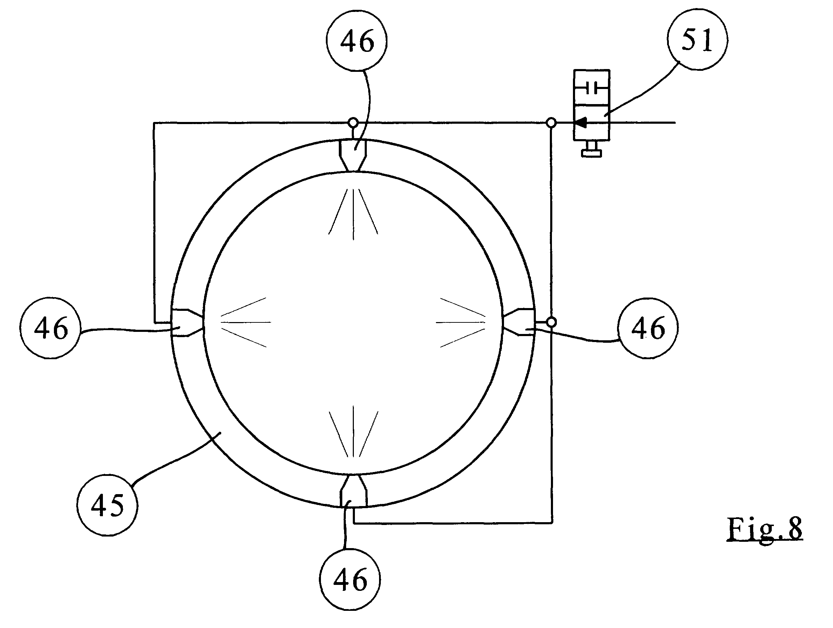

Figur 8 zeigt in schematischer Darstellung ein Ausführungsbeispiel mit vier auf dem Düsenring 45 angeordneten Druckluftdüsen 46. Diese Düsen sind vorzugsweise als Flachdüsen ausgebildet, um bei Beaufschlagung mit Druckluft eine Art "Druckluftmesser" zu bilden, das den kompakten aus der Einschleuseinrichtung austretenden Volumenstrom 10 blitzschnell durchtrennt und an der Trennstelle eine die Förderenergie enthaltende "Druckluftblase" einschiebt. Ein von Hand oder durch Programmsteuerung zu betätigendes Schaltventil 51 kontrolliert die intermittierende Druckluftzufuhr.

Im praktischen Betrieb wird man vorzugsweise Programmsteuerungen wählen, bei denen die Drehzahl der Förderschnecke 3, der Volumenstrom des einzuschleusenden Materials 10 sowie die Länge und der Förderwiderstand des Förderschlauchs 48 die den Ablauf bestimmenden Parameter sind.

## Patentansprüche

1. Verfahren zum Einbringen von festen schüttgutartigen bis flüssig-teigigen Stoffen in Prozessabläufe, vor allem Fördersysteme, die ein höheres Druckniveau haben, mit einer Sperrstrecke zur Abdichtung des Systemdrucks, durch die das Fördergut in Form eines Volumenstroms hindurchbewegt wird, und einer oder mehreren angetriebenen mechanischen Einrichtungen, die Druck- und Fördergutbewegung in Richtung auf die Sperrstrecke erzeugen, **dadurch gekennzeichnet,** dass in der Sperrstrecke (6) zusätzlich zu dem axialen auch ein von den Wandungen der Sperrstrecke (6) nach innen gerichteter Druck auf den Volumentrom (10) ausgeübt wird.

2. Verfahren nach Anspruch 1, **dadurch gekennzeichnet,** dass das Fördergut (10) durch den Wandungsdruck bei entsprechender Kornverteilung hinreichend verdichtet wird, um durch Schließung der Hohlräume zwischen den einzelnen Partikeln die den Systemdruck (7) abdichtende Sperrwirkung zu erzeugen.

3. Verfahren nach Anspruch 1 oder 2, **dadurch gekennzeichnet,** dass dem Fördergut (2) bei ungünstiger Kornverteilung ein Hilfsstoff (14) zum Schließen der Hohlräume zwischen den einzelnen Partikeln beigegeben wird.

4. Verfahren nach Anspruch 3, **dadurch gekennzeichnet,** dass der die Dichtwirkung in der Sperrstrecke (6) verbessernde Hilfsstoff inert gegenüber dem Fördergut (2) ist und nach der Einbringung durch geeignete Maßnahmen bzw. Vorrichtungen wieder entfernt wird.

5. Verfahren nach Anspruch 3 oder 4, **dadurch gekennzeichnet,** dass der Hilfsstoff (14) und das Fördergut (2) in einem Zyklon (28) voneinander getrennt werden.

6. Verfahren nach einem der Ansprüche 3 bis 5, **dadurch gekennzeichnet,** dass der Hilfsstoff (14) nach der Ausscheidung dem Fördergut (2) vor der Sperrstrecke (6) wieder zugeleitet wird.

7. Verfahren nach einem der Ansprüche 1 bis 6, **dadurch gekennzeichnet,** dass durch Anpassung des Volumenstroms (10) an vorgegebene Werte eine genaue Dosierung und durch gezielte Änderung eine Regelung der zeitlichen Einbringmenge durchgeführt wird.

8. Vorrichtung zum Einbringen von festen schüttgutartigen bis flüssig-teigigen Stoffen in Prozessabläufe, vor allem Fördersysteme, die ein höheres Druckniveau haben, mit einer Sperrstrecke zur Abdichtung des Systemdrucks durch die das Fördergut in Form eines Volumenstroms hindurch bewegbar ist, und einer oder mehreren angetriebenen mechanischen Einrichtungen die Druck- und Fördergutbewegung in Richtung auf die Sperrstrecke erzeugen, **dadurch gekennzeichnet,** dass in der Sperrstrecke (6) zusätzlich zu dem axialen auch ein von den Wandungen der Sperrstrecke (6) nach innen gerichteter Druck auf den Volumenstrom (10) ausgeübt ist.

9. Vorrichtung nach Anspruch 8, **dadurch gekennzeichnet,** dass sich die Sperrstrecke (6) innerhalb eines umhüllenden Schlauchs (8) befindet, der von außen durch ein gasförmiges oder flüssiges Medium mit Druck beaufschlagbar ist.

10. Vorrichtung nach Anspruch 9, **dadurch gekennzeichnet,** dass zwischen dem Druckraum (9) und der Förderleitung (7) eine Verbindungsleitung (22) angeordnet ist.

11. Vorrichtung nach Anspruch 9 oder 10, **dadurch gekennzeichnet,** dass der umhüllende Schlauch (8) von einer Wendel (23) umgeben ist, deren Durchmesser durch Torsion in vorgegebenem Maße verkleinerbar ist.

12. Vorrichtung nach Anspruch 8, **dadurch gekennzeichnet,** dass zumindest ein Teil der Sperrstrecke (6) durch ein konisches Rohr (26) gebildet ist.

13. Vorrichtung nach einem der Ansprüche 8 bis 12, **dadurch gekennzeichnet,** dass in das Fördergut (2) ein Hilfsstoff (14) einschleusbar ist.

14. Vorrichtung nach Anspruch 13, **dadurch gekennzeichnet,** dass der Hilfsstoff (14) aus elastischem oder plastischem Material besteht.

15. Vorrichtung nach Anspruch 13, **dadurch gekennzeichnet,** dass der Hilfsstoff (14) aus faserigem Material besteht.

16. Vorrichtung nach Anspruch 13, **dadurch gekennzeichnet,** dass der Hilfsstoff (14) aus einer gefrorenen Flüssigkeit oder einem gefrorenen Gas besteht.

17. Vorrichtung nach Anspruch 13, **dadurch gekennzeichnet,** dass der Hilfsstoff aus Schnee, kleingehacktem Eis oder Kohlensäureschnee besteht.

18. Vorrichtung nach einem der Ansprüche 8 bis 17, **dadurch gekennzeichnet,** dass hinter der Einbringeinrichtung Zerkleinerungseinrichtungen (32 und 34 bis 41) angeordnet sind.

19. Vorrichtung nach einem der Ansprüche 8 bis 18, **dadurch gekennzeichnet,** dass am Austrag der Einbringeinrichtung ein mit vorzugsweise radial angeordneten Druckluftdüsen (46) bestückter Düsenring (45) vorgesehen ist.

20. Vorrichtung nach Anspruch 19, **dadurch gekennzeichnet,** dass die Druckluftdüsen (46) in vorbestimmbaren Zeitintervallen mit Druckluft beaufschlagbar sind.
